# EUROPEAN PATENT APPLICATION

(11) **EP 4 517 934 A1**
(43) Date of publication of application: **05.03.2025**
(21) Application number: 23795558.8
(22) Date of filing: 27.04.2023
(51) Int. Cl.: H01M 10/615, H01M 10/625, H01M 10/637, B60L 58/27

(54) **HEATING SYSTEM FOR POWER BATTERY, AND ELECTRIC VEHICLE**

(30) Priority: 28.04.2022 CN 202221001472 U
(71) Applicant: BYD Company Limited, Shenzhen, Guangdong 518118 (CN)
(72) Inventor: ZHANG, Ke, Shenzhen, Guangdong 518118 (CN); GUO, Zizhu, Shenzhen, Guangdong 518118 (CN); PAN, Yi, Shenzhen, Guangdong 518118 (CN); ZHU, Yan, Shenzhen, Guangdong 518118 (CN); SUN, Huajun, Shenzhen, Guangdong 518118 (CN)
(74) Representative: Mathys & Squire
(86) International application number: PCT/CN2023/091245
(87) International publication number: WO 2023/208126

(57) **Abstract**

The present disclosure provides a heating system for a power battery, and an electric vehicle. The power battery comprises a first cell group and a second cell group connected in series. The heating system comprises an inverter, an AC motor, a first controller, and a plurality of connection lines. The midpoints of three bridge arms of the inverter are connected to the head ends of three-phase coils of the AC motor in a one-to-one correspondence. The tail ends of the AC motor are connected together to form a neutral point. First ends of the connection lines are connected to the neutral point of the AC motor. Second ends of the connection lines are connected to a connection point between the first cell group and the second cell group. The first controller is configured to input a drive signal to the inverter. The first cell group, the second cell group, the inverter, the AC motor, and the connection lines form an AC self-heating loop.

## Description

### CROSS-REFERENCE TO RELATED APPLICATIONS

The present disclosure claims priority to Chinese Patent Application No. 202221001472.5, filed on April 28, 2022 and entitled "HEATING SYSTEM FOR POWER BATTERY AND ELECTRIC VEHICLE". The entire content of the above-referenced application is incorporated herein by reference.

### FIELD

The present disclosure relates to the field of vehicle technologies, and more specifically, to a heating system for a power battery and an electric vehicle.

### BACKGROUND

Characteristics of a power battery are significantly affected by an ambient temperature, and energy and power characteristics of a lithium-ion power battery are severely attenuated especially in a low-temperature environment. Therefore, the battery needs to be heated at a low temperature. For a heating manner of self-heating a battery core using an excitation current, how to ensure safety of a heating process has become a key issue.

### SUMMARY

A heating system for a power battery provided in the present disclosure can improve heating performance of an electric vehicle for a power battery.

An object of the present disclosure is to provide a new technical solution for a heating system for a power battery.

Another object of the present disclosure is to provide an electric vehicle. The electric vehicle includes the heating system.

According to a first aspect of the present disclosure, a heating system for a power battery is provided. The power battery includes a first battery core group and a second battery core group connected in series. The heating system includes an inverter, an alternating current motor, a first controller, and multiple connection lines. The inverter includes three bridge arms. A positive electrode of the power battery is connected to an upper bridge arm of the inverter. A negative electrode of the power battery is connected to a lower bridge arm of the inverter. Midpoints of the three bridge arms of the inverter are connected to head ends of three-phase coils of the alternating current motor respectively. Tail ends of the alternating current motor are connected together to form a neutral point. First ends of the connection lines are connected to the neutral point of the alternating current motor. Second ends of the connection lines are connected to a connection point between the first battery core group and the second battery core group. The first controller is configured to input a drive signal to the inverter. The first battery core group, the second battery core group, the inverter, the alternating current motor, and the connection lines form an alternating current self-heating loop.

According to an embodiment of the present disclosure, each of the multiple of connection lines is provided with a protection circuit, or the multiple connection lines correspond to a same switch.

The heating system includes a second controller, and the second controller is configured to control the switch to turn on/off the connection line.

According to an embodiment of the present disclosure, each of the multiple of connection lines is provided with a protection circuit, or the multiple connection lines share a protection circuit.

According to an embodiment of the present disclosure, at least one of the multiple connection lines is connected in series with at least one load.

According to an embodiment of the present disclosure, the at least one load includes a heating load, and the heating load is configured to heat the first battery core group and/or the second battery core group.

According to embodiments of the present disclosure, the heating load is attached to a surface of the first battery core group and/or a surface of the second battery core group.

According to an embodiment of the present disclosure, the heating load is arranged on a first surface of the first battery core group and/or a first surface of the second battery core group, the first surface of the first battery core group is a surface formed by stacking battery core units in the first battery core group, and the first surface of the second battery core group is a surface formed by stacking battery core units in the second battery core group.

According to an embodiment of the present disclosure, the heating load is arranged on a second surface of the first battery core group and/or a second surface of the second battery core group, the second surface of the first battery core group is a surface of at least one battery core unit in the first battery core group, and the second surface of the second battery core group is a surface of at least one battery core unit in the second battery core group.

According to an embodiment of the present disclosure, the heating load corresponds to a low-temperature region of the first battery core group and/or the second battery core group, and the low-temperature region is a region in which a temperature of the surface of the battery core group is lower than a first preset value.

According to a second aspect of the present disclosure, an electric vehicle is provided. The electric vehicle includes the heating system according to the first aspect.

In the heating system for a power battery and the electric vehicle of the present disclosure, multiple connection lines are added based on an original circuit topological structure of the electric vehicle. The connection lines are connected to the connection point between the first battery core group and the second battery core group from the neutral point of the alternating current motor. The multiple connection lines share an excitation current, and serve as redundant backups for each other, which significantly increasing safety and stability of a self-heating system.

Other features and advantages of the present disclosure are apparent from the following detailed descriptions of exemplary embodiments of the present disclosure with reference to the drawings.

### BRIEF DESCRIPTION OF THE DRAWINGS

Accompanying drawings are incorporated into and constitute a part of this specification, show embodiments that conform to the present disclosure, and are used together with this specification to describe the principle of the present disclosure.
FIG. 1 is a block diagram of a heating system for a power battery according to an embodiment of the present disclosure;
FIG. 2 is a specific circuit diagram of a heating system for a power battery according to an embodiment of the present disclosure;
FIG. 3 is a block diagram of a heating system for a power battery according to another embodiment of the present disclosure;
FIG. 4 is a block diagram of a heating system for a power battery according to still another embodiment of the present disclosure;
FIG. 5 is a schematic diagram of a structure of a battery core group according to an embodiment of the present disclosure;
FIG. 6 is a schematic diagram of a structure of a battery core group according to an embodiment of the present disclosure; and
FIG. 7 is a schematic diagram of an electric vehicle according to an embodiment of the present disclosure.

In the drawings:
1-first battery core group; 2-second battery core group; 3-inverter; 4-alternating current motor;
5 and 6-switch; 7-first controller; 8-second controller; P1 and P2-connection point;
N-neutral point; S1, S2, S3, S4, S5, S6, and S7-connection line;
T1, T2, T3, T4, T5, and T6-insulated gate bipolar transistor;
Q1, Q2, Q3, Q4, Q5, and Q6-drive signal; and
VD1, VD2, VD3, VD4, VD5, and VD6-diode.

### DETAILED DESCRIPTION

Various exemplary embodiments of this specification are described in detail with reference to the accompanying drawings.

The following descriptions of at least one exemplary embodiment are merely illustrative, and in no way constitute any limitation on embodiments of this specification and application or use of this specification.

It should be noted that, similar reference signs or letters in the accompanying drawings indicate similar items. Therefore, once an item is defined in one accompanying drawing, the item does not need to be further discussed in the subsequent accompanying drawings.

In an electric vehicle, an inverter is connected between a power battery and an alternating current motor. One of the main functions of the inverter is to convert a direct current output by the power battery into an alternating current to drive the alternating current motor to rotate to drive a wheel end to rotate. A power battery heating solution in the embodiments of the present disclosure utilizes a circuit topological structure between the power battery, the inverter, and the alternating current motor.

In the embodiments of the present disclosure, the power battery includes a first battery core group and a second battery core group connected in series. A heating system includes the inverter, the alternating current motor, a first controller, and multiple connection lines. The inverter includes three bridge arms. A positive electrode of the power battery is connected to an upper bridge arm of the inverter. A negative electrode of the power battery is connected to a lower bridge arm of the inverter. Midpoints of the three bridge arms of the inverter are connected to head ends of three-phase coils of the alternating current motor respectively. Tail ends of the alternating current motor are connected together to form a neutral point. First ends of the connection lines are connected to the neutral point of the alternating current motor, and second ends of the connection lines are connected to a connection point between the first battery core group and the second battery core group.

In the embodiments of the present disclosure, the first battery core group, the second battery core group, the inverter, the alternating current motor, and the connection lines form an alternating current self-heating loop. In the embodiments of the present disclosure, the first controller is configured to input a drive signal to the inverter. Under the effect of the drive signal, the inverter alternately turns on the first battery core group and the alternating current motor and the second battery core group and the alternating current motor, so that the first battery core group and the second battery core group alternately charge each other, thereby heating the first battery core group and the second battery core group.

The heating system for a power battery in the embodiments of the present disclosure includes multiple connection lines. The multiple connection lines share an excitation current, which reduces a current on a single connection line, and improves safety of the heating system. In the same heating efficiency, the design of multiple connection lines can ensure that the current on the single connection line is not excessive, preventing the connection line from burning out due to the excessive current, thereby improving the safety of the heating system.

The multiple connection lines are in a parallel relationship, and may also serve as redundant backups for each other. A failure of one connection line does not affect normal operations of the other connection lines, and the power battery can still be heated, which significantly increases the safety and stability of a self-heating system.

In addition, because the single connection line needs to carry a small excitation current, requirements on a material and a radius of the connection line are reduced, which is beneficial to reducing costs of the heating system.

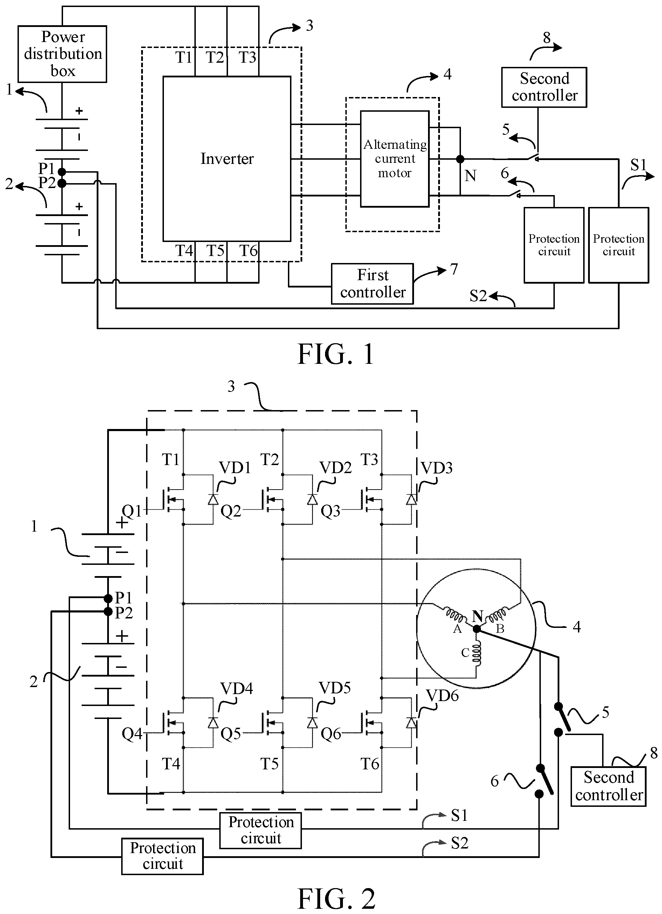

The following describes a heating system for a power battery provided in the embodiments of the present disclosure with reference to FIG. 1 to FIG. 4.

Referring to FIG. 1 and FIG. 2, the power battery includes a first battery core group 1 and a second battery core group 2 connected in series. The heating system includes an inverter 3, an alternating current motor 4, a first controller 7, a connection line S1, and a connection line S2.

The alternating current motor 4 is star-connected, and three tail ends of three-phase coils (a coil A, a coil B, and a coil C) are connected together as a common end. The common end is a neutral point N of the alternating current motor 4.

The inverter 3 includes three bridge arms. A positive electrode of the power battery is connected to an upper bridge arm of the inverter 3. A negative electrode of the power battery is connected to a lower bridge arm of the inverter 3. Midpoints of the three bridge arms of the inverter 3 are connected to head ends of the three-phase coils of the alternating current motor 4 respectively.

A first end of the connection line S1 is connected to the neutral point N of the alternating current motor 4, and a second end of the connection line S1 is connected to a connection point P1 between the first battery core group 1 and the second battery core group 2. A first end of the connection line S2 is connected to the neutral point N of the alternating current motor, and a second end of the connection line S2 is connected to a connection point P2 between the first battery core group 1 and the second battery core group 2.

In an example, the first battery core group 1 and the second battery core group 2 belong to a same battery pack. The battery pack externally provides a total positive port, a total negative port, a third port leading from the connection point P1, and a fourth port leading from the connection point P2. A second end of the connection line S1 is connected to the connection point P1 between the first battery core group 1 and the second battery core group 2 through the third port. A second end of the connection line S2 is connected to the connection point P2 between the first battery core group 1 and the second battery core group 2 through the fourth port. In another example, the first battery core group 1 and the second battery core group 2 belong to different battery packs.

The first controller 7 is configured to input a drive signal to the inverter 3, to control the inverter 3 to alternately turn on the first battery core group 1 and the alternating current motor 4, and the second battery core group 2 and the alternating current motor 4, so that the first battery core group 1 and the second battery core group 2 alternately charge each other.

In an example, referring to FIG. 1 and FIG. 2, the inverter 3 includes an IGBT tube T1, an IGBT tube T2, an IGBT tube T3, an IGBT tube T4, an IGBT tube T5, and an IGBT tube T6. The IGBT tubes T1 to T6 form the three bridge arms. An insulated gate bipolar transistor (IGBT) is a composite voltage-driven power semiconductor device composed of a bipolar junction transistor (BJT) tube and a metal-oxide-semiconductor (MOS) tube, and has advantages of both high input impedance of a MOSFET (metal-oxide-semiconductor field-effect transistor) and low on-voltage drop of a giant transistor (GTR). Referring to FIG. 2, in the inverter 3, each IGBT tube is further connected in anti-parallel with a diode, and diodes VD1 to VD6 may protect the circuit. In another embodiment, the IGBT tubes T1 to T6 may alternatively be replaced with the BJT tubes respectively. In another embodiment, the IGBT tubes T1 to T6 may alternatively be replaced with the MOS tubes respectively. In another embodiment, the IGBT tubes T1 to T6 may alternatively be replaced with silicon carbide (SiC) power tubes respectively.

In the embodiments of the present disclosure, referring to FIG. 2, the first controller outputs six drive signals Q1 to Q6. The drive signal Q1 is applied to the IGBT tube T1, the drive signal Q2 is applied to the IGBT tube T2, the drive signal Q3 is applied to the IGBT tube T3, the drive signal Q4 is applied to the IGBT tube T4, the drive signal Q5 is applied to the IGBT tube T5, and the drive signal Q6 is applied to the IGBT tube T6. The first controller alternately turns on a loop between the first battery core group 1 and the alternating current motor 4 and a loop between the second battery core group 2 and the alternating current motor 4 by applying the drive signals Q1 to Q6 to the IGBT tubes T1 to T6, so that the first battery core group 1 and the second battery core group 2 alternately charge each other. In an example, the first battery core group 1 is discharged, and the inverter 3 converts the direct current output by the first battery core group 1 into the alternating current, and inputs the alternating current to the alternating current motor 4. The alternating current motor 4 stores the electric energy in the coil to charge the second battery core group 2. Then, the second battery core group 2 is discharged, and the inverter 3 converts the direct current output by the second battery core group 2 into the alternating current, and inputs the alternating current to the alternating current motor 4. The alternating current motor 4 stores the electric energy in the coil to charge the first battery core group 1. Cyclically, the first battery core group 1 and the second battery core group 2 alternately charge each other through the alternating current motor 4.

Referring to FIG. 1 and FIG. 2, the connection line S1 is provided with a switch 5, and the connection line S2 is provided with a switch 6. The heating system further includes a second controller 8. The second controller 8 is configured to control on-off states of the switch 5 and the switch 6, so that the connection line S1 and the connection line S2 are turned on when the power battery needs to be heated, and are turned off when the power battery does not need to be heated, to ensure safety of the vehicle and the power battery. For example, the second controller 8 controls the switch 5 and the switch 6 to be turned off in a driving state of the electric vehicle, to ensure the safety of the vehicle during traveling.

Referring to FIG. 1 and FIG. 2, each of the connection line S1 and the connection line S2 is provided with a protection circuit, for example, a fuse and a relay, to improve safety of a battery heating process.

In an example, one or more of the multiple connection lines are connected in series with a load, and the load consumes some energy to prevent overheating of the connection lines. For example, only the connection line S1 is connected in series with a load, or only the connection line S2 is connected in series with a load, or each of the connection line S1 and the connection line S2 is connected in series with a load. The loads connected in series to different connection lines may have same or different power.

FIG. 1 further shows a power distribution box of the electric vehicle. The power distribution box mainly distributes power based on a status of a power load of the electric vehicle.

In an example, the first battery core group 1 and the second battery core group 2 belong to the same battery pack, and the first battery core group 1 and the second battery core group 2 have a same electromotive force. In other words, the second ends of the connection lines are connected to an equal potential point of the battery pack. The equal potential point means that an absolute value of a voltage difference from the point to the total positive port of the battery pack is the same as an absolute value of a voltage difference from the point to the total negative port of the battery pack.

In an example, the first battery core group 1 and the second battery core group 2 belong to the same battery pack, and the first battery core group 1 and the second battery core group 2 have different electromotive forces. In other words, the second ends of the connection lines are connected to a non-equal potential point of the battery pack. The non-equal potential point means that the absolute value of the voltage difference from the point to the total positive port of the battery pack is not equal to the absolute value of the voltage difference from the point to the total negative port of the battery pack. As shown in FIG. 1, battery units included in the first battery core group 1 and battery units included in the second battery core group 2 are the same in model and different in quantity. Therefore, the first battery core group and the second battery core group have different electromotive forces, and the second ends of the connection lines are connected to the non-equal potential point of the battery pack.

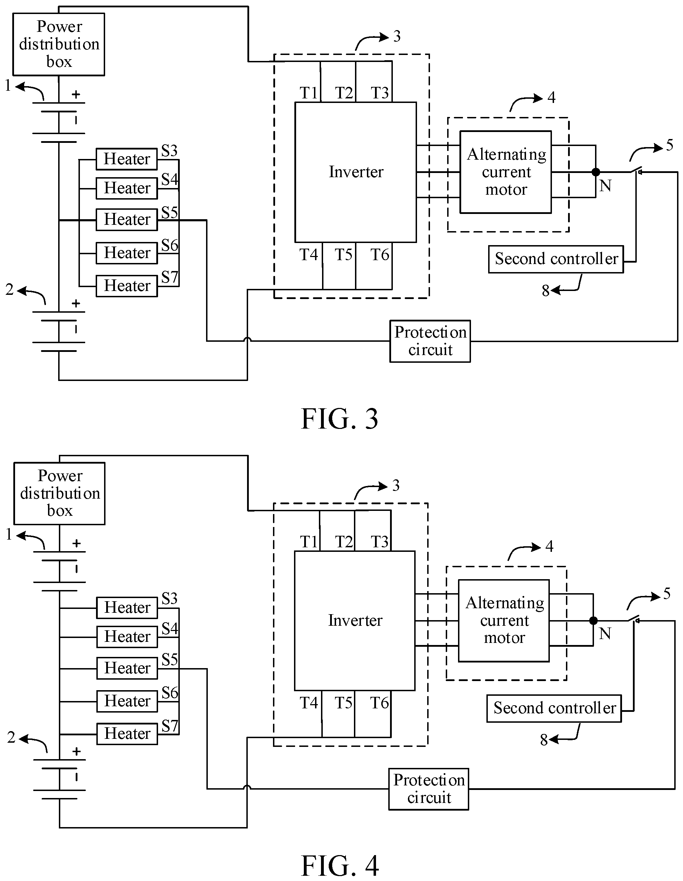

Referring to FIG. 3 and FIG. 4, the power battery includes a first battery core group 1 and a second battery core group 2 connected in series. The heating system includes an inverter 3, an alternating current motor 4, a first controller, a connection line S3, a connection line S4, a connection line S5, a connection line S6, and a connection line S7.

Referring to FIG. 3, first ends of the connection lines S3 to S7 are connected in parallel and then connected to a neutral point N of the alternating current motor 4, and second ends of the connection lines S3 to S7 are connected in parallel and then connected to a same connection point between the first battery core group 1 and the second battery core group 2. Referring to FIG. 4, the first ends of the connection lines S3 to S7 are connected in parallel and then connected to the neutral point N of the alternating current motor 4, and the second ends of the connection lines S3 to S7 are respectively connected to different connection points between the first battery core group 1 and the second battery core group 2.

Referring to FIG. 3 and FIG. 4, the connection lines S3 to S7 correspond to a same switch 5. The heating system further includes a second controller 8. The second controller 8 is configured to control the switch 5 to turn on the connection lines S3 to S7 simultaneously, so that the connection lines S3 to S7 are turned on when the power battery needs to be heated, and are turned off when the power battery does not need to be heated, to ensure safety of the vehicle and the power battery. For example, the second controller 8 controls the switch 5 to be turned off in a driving state of the electric vehicle, to ensure safety of the vehicle during traveling.

Referring to FIG. 3 and FIG. 4, the connection lines S3 to S7 share a same protection circuit. For example, the protection circuit may be a fuse or a relay, to improve safety of a battery heating process.

Each of the connection lines S3 to S7 is connected in series with a heating load, that is, a heater shown in FIG. 3 and FIG. 4. In the embodiments of the present disclosure, the heating load is configured to heat the first battery core group 1 and/or the second battery core group 2. A heating manner in which the heating load heats the first battery core group 1 and/or the second battery core group 2 is thermoelectric conversion. Under the effect of the current in the connection line, electric energy is converted into thermal energy, to cause the heating load to heat up. The heated heating load may conduct the heat to the first battery core group 1 and/or the second battery core group 2.

In the embodiments of the present disclosure, the heating load may be any one of a heating film, a heating plate, or a heating wire. The heating load may be any one of a resistive heating film, a positive temperature coefficient (PTC) heater, an eddy current heater, a ceramic heater, or a silicon rubber heating plate, or may be another type of heating load. For example, the connection line S3 is connected in series with a PTC heater, and the connection line S4 is connected in series with a resistive heating film.

In an example, the heating load may be attached to a surface of the first battery core group 1 and/or the second battery core group 2, to heat the first battery core group 1 and/or the second battery core group 2.

In the embodiments of the present disclosure, the first battery core group 1 and the second battery core group 2 may be respectively formed by stacking multiple battery core units. The battery units may include a single battery or a battery module. Stacking may be arranged in a thickness direction of the battery core unit, or may be arranged in a length or width direction of the battery core unit.

In an example, the heating load is arranged on a second surface of the first battery core group 1 and/or a second surface of the second battery core group 2. The second surface of the first battery core group 1 is a surface of at least one battery core unit in the first battery core group 1, and the second surface of the second battery core group 2 is a surface of at least one battery core unit in the second battery core group 2. In an example, the second surface may be a surface of the battery core unit in the battery core group.

For example, if the battery unit is in a blade shape, the heating load may be attached to an upper surface or a lower surface of the battery core unit. For example, if the battery unit is in a square shape, the heating load may be attached to any surface of the battery core unit. For example, if the battery unit is in a cylindrical shape, the battery unit has three surfaces, including two circular end surfaces and one curved surface, and the heating load may be attached to the curved surface.

In other embodiments, the second surface may also refer to an opposing surface of two adjacent battery core units.

In an example, the heating load is arranged on a first surface of the first battery core group 1 and/or a first surface of the second battery core group 2. The first surface of the first battery core group 1 is a surface formed by stacking the battery core units in the first battery core group 1, and the first surface of the second battery core group 2 is a surface formed by stacking the battery core units in the second battery core group 2. This manner allows the heating load to be close to the multiple battery core units in the battery core group simultaneously, which facilitates heating of the multiple battery core units in the first battery core group 1 simultaneously, and achieves a more even heating effect. The surface formed by stacking may be in a left-to-right direction, or may be in an up-to-down direction.

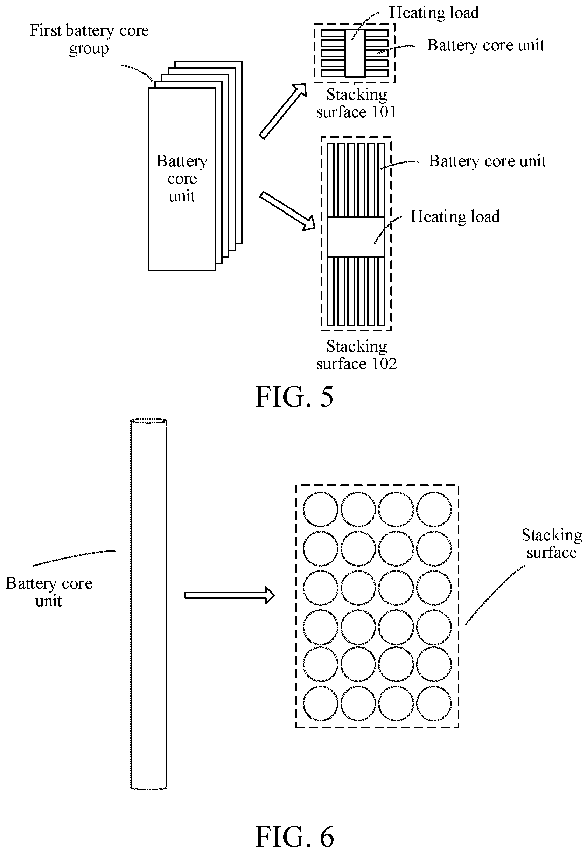

For example, referring to FIG. 5, the first battery core group 1 is formed by stacking multiple blade-shaped battery core units. The battery core units are stacked to form a stacking surface 101 and a stacking surface 102. A heating load is arranged on the stacking surface 101 or the stacking surface 102. For example, referring to FIG. 6, the second battery core group 2 is formed by stacking multiple cylindrical battery core units. Circular end surfaces of two sides of the multiple battery core units form a stacking surface respectively, and a heating load is arranged on the stacking surface. Alternatively, intermediate curved surfaces of the multiple battery core units form a stacking surface, and a heating load is arranged on the stacking surface.

In an example, the battery core units are stacked in a same direction to form multiple first surfaces, and the heating load is arranged on the first surface with a large area, which may facilitate design and layout of the heating load. For example, the heating load is arranged on the first surface with the large area. When load power is the same, a heating load in a heating film form may be selected. Because the heating film has a larger contact area, the battery core group is heated more evenly.

In an example, the heating load is arranged corresponding to a center of the battery core unit. When the battery is heated through an excitation current, uneven current density distribution inside the battery core unit tends to cause a large temperature difference in the battery core unit. The temperature is relatively high at both ends of the battery core unit, and relatively low in the center. The heating load is arranged corresponding to the center of the battery core unit to selectively locally heat a low-temperature region of the battery core unit, thereby greatly reducing temperature differences in different regions of the battery core unit, and enhancing uniformity in overall temperature distribution.

In an example, the heating load corresponds to a low-temperature region of the first battery core group 1 and/or the second battery core group 2. The low-temperature region of the battery core group is a region in which a temperature of the surface of the battery core group is lower than a first preset value. For example, the first preset value is 10 degrees Celsius. The first preset value may correspond to a range. For example, the range is 10 to 15 degrees Celsius. The first preset value is set within the range based on an operating condition. In an example, the low-temperature region of the battery core group is a target region, and a temperature of the target region is lower than the first preset value and lower than a temperature of a high-temperature region of the battery core group by more than a second preset value. For example, the second preset value is 5 degrees Celsius.

For example, referring to FIG. 5, the first battery core group 1 is formed by stacking multiple blade-shaped battery core units. The battery core units are stacked to form a stacking surface 101 and a stacking surface 102. A heating load is arranged on the stacking surface 101 or the stacking surface 102, and the heating load corresponds to a center of the battery core unit. In an example, the stacking surface 102 has a larger area. The heating load is arranged on the stacking surface 102, and the heating load corresponds to the center of the battery core unit.

**In** an example, a material of a wire used to connect circuits is a metal with good conductivity, such as copper or aluminum, or may be a carbon-based material with good conductivity.

**In** an example, one connection line may be connected in series with one heating load. A form, model, and heating efficiency of the heating load may be flexibly designed based on an actual requirement. A specific arrangement position of the heating load may also be flexibly designed based on a space environment and a heating requirement. Device selection and layout may be performed on the heating loads based on a result of an actual test or a simulation experiment. In an example, one connection line is connected in series with multiple heating loads. Forms, models, and heating efficiencies of the multiple heating loads may be the same or different. A specific quantity and distribution positions of the multiple heating loads may be flexibly designed based on the space environment and the heating requirement. Device selection and layout may be performed on the heating loads based on the result of the actual test or the simulation experiment.

In an example, each of at least two or more heating lines is connected in series with one heating load. In an example, forms, models, and heating efficiencies of the heating loads may be the same or different. In an example, a specific quantity and distribution positions of the heating loads may be flexibly designed based on the space environment and the heating requirement. In an example, device selection and layout may be performed on the heating loads based on the result of the actual test or the simulation experiment.

According to the heating system for a power battery provided in the embodiments of the present disclosure, a connection line is added to the original circuit topological structure of the electric vehicle. The connection line is from the neutral point of the alternating current motor to the connection point between the first battery core group and the second battery core group, which requires little modification to the original circuit of the electric vehicle, and the solution is simple and easy to implement.

According to the heating system for a power battery provided in the embodiments of the present disclosure, the upper bridge arm and lower bridge arm of the inverter are used by time sharing, so that an alternating pulse current can be generated by using three inductance coils of the motor to a larger extent, to rapidly heat the two battery core groups.

During heating of the power battery, a frequency and a magnitude of a charge and discharge current, that is, an excitation current, are limited by relevant elements. The heating system provided in the embodiments of the present disclosure can limit the excitation current to a small extent, making it possible to heat the battery with a large excitation current. In a self-heating condition of a conventional battery pack, a maximum current of the inverter is limited to a minimum current of withstand currents of the IGBT tubes T1 to T6. However, in the embodiments of the present disclosure, the maximum current of the inverter is limited to a sum of withstand currents of the IGBT tubes T1, T2, and T3, and a sum of withstand currents of the IGBT tubes T4, T5, and T6.

The heating system for a power battery in the embodiments of the present disclosure includes multiple connection lines. The multiple connection lines share an excitation current, which reduces a current on a single connection line, and improves safety of the heating system. In the same heating efficiency, compared to the design of only one connection line, the design of multiple connection lines can ensure that the current on the single connection line is not excessive, preventing the connection line from burning out due to the excessive current, thereby improving the safety of the heating system.

The multiple connection lines may also serve as the redundant backups for each other. A failure of one connection line does not affect normal operations of the other connection lines, and the power battery can still be heated, which significantly increases the safety and stability of a self-heating system.

In addition, because the single connection line needs to carry a small excitation current, requirements on a material and a radius of the connection line are reduced, which is beneficial to reducing costs of the heating system.

The first controller in the embodiments of the present disclosure may include a processor, a memory, and a program or instructions stored in the memory and executable on the processor. The program or instructions, when executed by the processor, implement self-heating of the power battery.

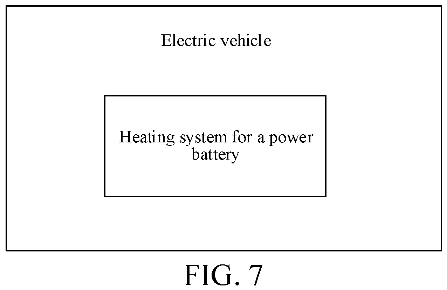

An embodiment of the present disclosure provides an electric vehicle. As shown in FIG. 7, the electric vehicle includes the heating system for a power battery according to any one of the foregoing embodiments.

The embodiments of this specification are all described in a progressive manner. Mutual reference can be made for the same or similar parts in the embodiments. Each embodiment focuses on a difference from other embodiments. For the electric vehicle embodiment, for related parts, refer to partial descriptions of the heating system embodiment.

The embodiments of this specification have been described above. The foregoing descriptions are exemplary but not exhaustive, and are also not limited to the disclosed embodiment. Many modifications and variations are apparent to a person of ordinary skill in the art without departing from the scope of the described embodiments. The terms used herein are selected to explain the principle of the embodiments, practical applications, or improvements for technologies in the market best or enable a person of ordinary skill in the art to understand the embodiments disclosed herein.

## Claims

1. A heating system for a power battery, the power battery comprising a first battery core group (1) and a second battery core group (2) connected in series, and the heating system comprising an inverter (3), an alternating current motor (4), a first controller (7), and a plurality of connection lines;
the inverter (3) comprising three bridge arms, a positive electrode of the power battery being connected to an upper bridge arm of the inverter (3), a negative electrode of the power battery being connected to a lower bridge arm of the inverter (3), midpoints of the three bridge arms of the inverter (3) being connected to head ends of three-phase coils of the alternating current motor (4) respectively, and tail ends of the alternating current motor (4) being connected together to form a neutral point;
first ends of the connection lines being connected to the neutral point of the alternating current motor (4), and second ends of the connection lines being connected to a connection point between the first battery core group (1) and the second battery core group (2);
the first controller (7) being configured to input a drive signal to the inverter (3); and
the first battery core group (1), the second battery core group (2), the inverter (3), the alternating current motor (4), and the connection lines forming an alternating current self-heating loop.

2. The heating system according to claim 1, wherein each of the plurality of connection lines is provided with a switch, or the plurality of connection lines correspond to a same switch; and
the heating system comprises a second controller (8), and the second controller (8) is configured to control the switch to turn on/off the connection line.

3. The heating system according to any one of claims 1 to 2, wherein each of the plurality of connection lines is provided with a protection circuit, or the plurality of connection lines share a protection circuit.

4. The heating system according to any one of claims 1 to 3, wherein at least one of the plurality of connection lines is connected in series with at least one load.

5. The heating system according to any one of claims 1 to 4, wherein the at least one load comprises a heating load, and the heating load is configured to heat the first battery core group (1) and/or the second battery core group (2).

6. The heating system according to any one of claims 1 to 5, wherein the heating load is attached to a surface of the first battery core group (1) and/or a surface of the second battery core group (2).

7. The heating system according to any one of claims 1 to 6, wherein the heating load is arranged on a first surface of the first battery core group (1) and/or a first surface of the second battery core group (2), the first surface of the first battery core group (1) is a surface formed by stacking battery core units in the first battery core group (1), and the first surface of the second battery core group (2) is a surface formed by stacking battery core units in the second battery core group (2).

8. The heating system according to any one of claims 1 to 7, wherein the heating load is arranged on a second surface of the first battery core group (1) and/or a second surface of the second battery core group (2), the second surface of the first battery core group (1) is a surface of at least one battery core unit in the first battery core group (1), and the second surface of the second battery core group (2) is a surface of at least one battery core unit in the second battery core group (2).

9. The heating system according to any one of claims 1 to 8, wherein the heating load corresponds to a low-temperature region of the first battery core group (1) and/or the second battery core group (2), and the low-temperature region is a region in which a temperature of the surface of the battery core group is lower than a first preset value.

10. An electric vehicle, comprising the heating system according to any one of claims 1 to 9.
